# EUROPEAN PATENT SPECIFICATION

(11) **EP 4 300 064 B1**
(45) Date of publication and mention of the grant of the patent: **29.01.2025**
(21) Application number: 22181544.2
(22) Date of filing: 28.06.2022
(51) Int. Cl.: G01L 5/28, B60W 30/09, G01M 17/007, B60W 40/10

(54) **MEASURING STOPPING DISTANCE OF A WORKING MACHINE WITH AN APPARATUS**
MESSUNG DES ANHALTEWEGS EINER ARBEITSMASCHINE MIT EINEM GERÄT
MESURE DE LA DISTANCE D'ARRÊT D'UNE MACHINE DE TRAVAIL AVEC UN APPAREIL

(43) Date of publication of application: 03.01.2024
(73) Proprietor: Sandvik Mining and Construction Oy, 33330 Tampere (FI)
(72) Inventor: RAUHALA, Riku, 33311 Tampere (FI); LEHTONEN, Jarkko, 33311 Tampere (FI)
(74) Representative: Sandvik

(56) References cited:
- KR-A- 20030 067 903

## Description

### FIELD OF THE INVENTION

The present application relates generally to working machines. More specifically, the present application relates to measuring stopping distance of a working machine.

### BACKGROUND OF THE INVENTION

Proximity detection systems (PDSs) are used to help to improve safety at mine and construction sites where risks of collision may occur. The PDS are generally designed to slow down and/or eventually stop a working machine in case the system detects a person or an object carrying a tag inside a predefined zone. The PDS needs to know stopping distance of the working machine to be able to work properly. An example system is disclosed in KR 20030067903 A. Therefore, capabilities of the stopping distance tests may be further improved.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure provide a stop distance measuring apparatus, which reveals if there is any failure in a control system preventing a working machine to slow down speed or stop it. This may be a fast and reliable way to test PDS function and/or brakes of the working machine. This and other benefits may be achieved by the features of the independent claims. Further advantageous implementation forms are provided in the dependent claims, the description, and the drawings.

According to a first aspect, an apparatus for measuring stopping distance of a working machine is disclosed. The apparatus may comprise a user interface; at least one processor; and at least one memory including a computer program code. The at least one memory and the computer code may be configured to, with the at least one processor, cause the apparatus at least to: receive at least one speed parameter based on at least one user input on the user interface; receive at least one speed information value from a controller or an engine control unit (ECU) of the working machine; send at least one command to the controller or the engine control unit to at least stop the working machine when the received speed information value is equal to the at least one speed parameter; and calculate the stopping distance of the working machine. The apparatus may be valuable for testing both brakes of the working machine and function of a Proximity Detection System (PDS). The safety and reliability of the working machines may also be improved with the accurately calculated stopping distance.

According to an example embodiment of the first aspect, the apparatus may be configured to receive a start input on the user interface; save at least the at least one speed information value from the controller or the engine control unit and at least one time value in the memory. The apparatus may be configured to save at least the at least one speed information value from the controller or the engine control unit, the at least one time value, and/or other values in the memory periodically. Saving is done every 50 ms, for example. Saving may be configured to start after the apparatus receives the start input and end when the speed information value received from the controller or the engine control unit is equal to zero; and calculate the stopping distance based on the at least one speed information value and the at least one time value saved in the memory. Also other values may be saved in the memory, for example, a gear, chassis angle, and/or brake pressure. In the memory saved values may allow accurate calculation of the stopping distance and a detailed review of a stopping event afterwards.

According to an example embodiment of the first aspect, the at least one command to the controller or the engine control unit may comprise at least one Proximity Detection System (PDS) command. When the apparatus is using PDS commands, the apparatus may be compatible with a vehicle intervention controller (VIC) interface of the working machine. This may make the apparatus easy to install in the working machines that already have the PDS and/or VIC.

According to an example embodiment of the first aspect, the apparatus may be configured to receive the speed parameter based on the at least one user input on the user interface; receive the at least one speed information value from the controller or the engine control unit; send a stopping command to the controller or the engine control unit of the working machine to stop the working machine when the received speed information value of the working machine is equal to the speed parameter; calculate the stopping distance of the working machine. When measuring the stopping distance, the apparatus may send a command to the controller or the engine control unit and the controller or the engine control unit (ECU) may send it further. All commands may be transmitted without human intervention. This means that the stopping distance may be calculated accurately and in the same way each time. If a person performs braking, the stopping distance may vary depending on the personal reaction time and testing results may be different each time. When a testing system is testing the stopping distance, the results may be close to each other.

According to an example embodiment of the first aspect, the apparatus may be configured to receive a first and a second speed parameter based on the at least two user input on the user interface; receive the at least one speed information value from the controller or the engine control unit; send a slowdown command to the controller or the engine control unit to decelerate the working machine, when the received speed information value of the working machine is equal to the first speed parameter; send a stopping command to the controller or the engine control unit to stop the working machine when the received speed information value of the working machine is equal to the second speed parameter; and calculate the stopping distance of the working machine. The test may be performed using more than one parameter.

According to an example embodiment of the first aspect, the stopping command comprises a controlled stop or an emergency stop command. The controlled stop means that the working machine may stop smoothly. The emergency stop command may be a full application of the brakes in order to bring the working machine to a stop as quickly as possible. The emergency stop may be made, for example, electrically by forcing the parking brake on. This way it may be possible to use different commands to declare or stop the working machine.

According to a second aspect, a method for measuring stopping distance with an apparatus for measuring stopping distance of a working machine is disclosed. The apparatus may comprise a user interface; at least one processor; and at least one memory including a computer program code. The method may comprise receiving at least one speed parameter based on at least one user input on the user interface; receiving at least one speed information value from a controller or the engine control unit (ECU) of the working machine; sending at least one command to the controller or the engine control unit to at least stop the working machine when the received speed information value of the working machine is equal to the at least one received speed parameter; and calculating the stopping distance of the working machine. This may be a valuable method for testing both brakes and PDS function. The safety of the working machines may also be improved with the accurately calculated stopping distance. The method may be applicable for calculating the stopping distance where the working machine may be braked under a desired condition during running of the working machine. This way it may inform the PDS the stopping distance between the working machine and a certain object or a leading vehicle existing or running ahead of the working machine.

According to an example embodiment of the second aspect, the method may further comprise receiving a start input on the user interface; saving at least the at least one speed information value from the controller or the engine control unit and at least one time value in the memory, wherein saving may start after the apparatus receives the start input and ending when the speed information value received from the controller or the engine control unit is equal to zero; and calculating the stopping distance based on at the at least one speed information value and the at least one time value saved in the memory.

According to an example embodiment of the second aspect, the method may further comprise receiving the speed parameter based on the at least one user input on the user interface; receiving the at least one speed information value from the controller or the engine control unit; sending a stopping command to the controller or the engine control unit to stop the working machine when the speed information value of the working machine is equal to the speed parameter; and calculating the stopping distance of the working machine.

According to an example embodiment of the second aspect, the method may further comprise receiving a first and a second speed parameter based on the at least two user input on the user interface; receiving the at least one speed information value from the controller or the engine control unit; sending a slowdown command to the controller or the engine control unit to decelerate the working machine, when the speed information value of the working machine is equal to the first speed parameter; sending a stopping command to the controller or the engine control unit to stop the working machine when the speed information value of the working machine is equal to the received second speed parameter; and calculating the stopping distance of the working machine.

According to a third aspect, a system for measuring stopping distance of a working machine is disclosed. The system may comprise an apparatus according to the first aspect; an engine control unit; and a controller. The controller may be the VIC. Safety of the working machines may be improved with the accurately calculated stopping distance, especially when using the PDS.

According to a third aspect, the controller or the engine control unit may be configured to send at least one speed information value to the apparatus, receive at least one command from the apparatus, and decelerate or stop the working machine. The controller or the engine control unit may have a controller or engine control unit communication interface that may allow the controller or the engine control unit to slow down or stop the working machine. The controller or the engine control unit may slow down or deaccelerate the working machine for example, by switching off an accelerator pedal signal and control a hydraulic brake with a proportional valve. The controller or the engine control unit may stop the working machine, for example, by electrically forcing a parking brake on. The controller or the engine control unit communication interface may be configured to enable the controller or the engine control unit to transmit and/or receive information.

According to a third aspect, the system may comprise a speed sensor. The speed sensor may be connected to the controller or the engine control unit communication interface. The controller or engine control unit communication interface may receive the speed information values from the speed sensor and the controller or the engine control unit may send the speed information values to the apparatus.

According to a third aspect, the controller is configured to send at least one speed information value to the apparatus, receive at least one command from the apparatus, send at least one command to the engine control unit for decelerating or stopping the working machine. The engine control unit may declare or stop the working machine.

According to a third aspect, the the engine control unit may comprise the controller, and the engine control unit is configured to send at least one speed information value to the apparatus, receive at least one command from the apparatus, and decelerate or stop the working machine. The controller may be the VIC. Thus, the controller or the VIC may be integrated to the ECU and there is no separate controller between the apparatus and the ECU. This kind of system may, however, have a so called middleman between the apparatus and the VIC. The middleman may make signal conversion from a controller area network (CAN) bus to the digital I/O world that the ECU understands. The system may be flexible and capable to communicate with different units and systems.

According to an example embodiment of the third aspect, the apparatus may be connected to the controller or the engine control unit via a wired or wireless connection. The wired connection may be a CAN bus. The CAN bus may enable faster communication between the apparatus and the controller, the engine control unit or between other electronic devices and modules in the working machine while reducing the amount of wiring.

According to a fourth aspect, a working machine is disclosed. The working machine may comprise the system according to the third aspect. The working machine with the system may simplify stopping distance measurement and checking condition of the PDS.

Any example embodiment may be combined with one or more other example embodiments. Many of the attendant features will be more readily appreciated as they become better understood by reference to the following detailed description considered in connection with the accompanying drawings.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 shows a simplified side view of a working machine comprising a system in which examples of disclosed embodiments may be applied;
Figure 2 shows an example of an apparatus for measuring stopping distance of the working machine, according to an example embodiment;
Figure 3a shows an example of a simplified side view of the apparatus, wherein test parameters are set, according to an example embodiment;
Figure 3b shows another example of a simplified side view of the apparatus, wherein a test may be started, according to an example embodiment;
Figure 3c shows a further example of a simplified side view of the apparatus showing the calculated stopping distance, according to an example embodiment;
Figure 4 shows an example of signalling and operations within a system, according to an example embodiment;
Figure 5 shows another example of signalling and operations within the system, according to an example embodiment; and
Figure 6 shows an example method according to an example embodiment of the invention.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

Proximity detection systems (PDS) help to improve safety at mine and construction sites where risks of collision may occur. They may be designed to prevent injury and possible loss of life during the operation of mining vehicles in close proximity to mining personnel. The systems may provide an early warning indication that alerts an operator to the presence and number of personnel and vehicles in the vehicle's vicinity. The PDS are generally designed to slow down and/or eventually stop the equipment in case the system detects a person inside a predefined zone. The systems may facilitate bi-directional notification and alert messaging against potential collisions between the following: vehicle to person, person to vehicle and vehicle to vehicle.

A controller area network (CAN) bus is a robust vehicle bus standard designed to allow microcontrollers and devices to communicate with each other's applications without a host computer. It is designed to allow the electronic control units (ECUs) found in today's vehicles, as well as other devices, to communicate with each other in a reliable, priority-driven fashion. Messages or frames are received by all devices in the network.

According to an example embodiment, stopping distance testing or brake testing is done with PDS interface. The PDS interface may be a vehicle intervention controller (VIC) interface. The interface may use CAN communication based on ISO TS 21815-2. Specified commands may be used to slowdown and stop the working machine. An easy and repeatable way to measure stopping distance of the working machine may be to use a program code of an apparatus to give those commands like PDS-system might but in a controlled and timed way. The apparatus may be called a PDS-simulator and a program code may be called a PDS-simulator software (SW). One, two or more speeds may be given as parameters and the PDS-simulator may give at least one command. A first command may be for slowdown to start and another for emergency stop to happen. The operator may give 20 km/h and 3km/h as an example for the first and second parameter. Then the operator may drive the working machine and accelerate. As soon as the speed reaches 20 km/h, the PDS-simulator may give slowdown command and the working machine may start to decelerate. When the speed has gone down to 3km/h the PDS-simulator may give emergency stop command and the working machine may stop. During the process, the PDS-simulator may have been tracking speed and time and may calculate a travelled distance. After stopping, the PDS-simulator may report the distance travelled during the slowdown and stop time. This may be very repeatable way to stop the working machine. It may also be an easy method to test how the PDS would actually be able to stop the working machine travelling at different speeds. In addition, it may be a good way to test PDS function and a brake performance and condition. It may be a useful tester or simulator, which may reveal if there is any failure in control system which may prevent the working machine to slow down speed or stop it when the command is coming via a CAN bus. It may be valuable method for factory testing and validation. The PDS-simulator may be used with all working machines that have the PDS-interface, such as, loaders, trucks and/or UG drill rigs.

According to an example embodiment, working machine comprises an apparatus for measuring stopping distance of a working machine and a controller. The working machine may be a mining vehicle or an underground mining vehicle, for example, a dump truck, a load haul dump (LHD) vehicle, a drill rig, a development drill, a drilling machine, a bolting or reinforcing vehicle, a rock removal machine, a longhole drill rig, an explosive charging machine, a loader, a transport vehicle, a loading or hauling machine, setting vehicles of gallery arcs or nets, a shotcrete machine, a crusher, or a measuring vehicle.

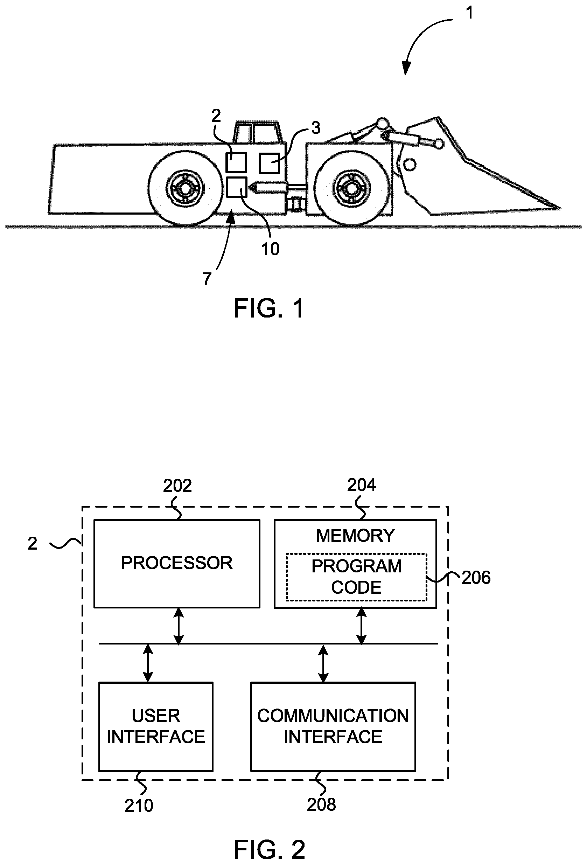

Figure 1 depicts example of a simplified working machine 1 only showing some elements and functional entities, whose implementation may differ from what is shown. It is apparent to a person skilled in the art that the working machine 1 may comprise also other functions and structures than those shown in Figure 1.

The embodiments are not, however, restricted to the working machine 1 given as an example but a person skilled in the art may apply the solution to other working machines provided with necessary properties.

The example of Figure 1 shows a simplified side view of the working machine1 comprising a system for measuring stopping distance of a working machine 1. Any functionality disclosed herein may also be applied as a method.

According to an example embodiment, a system 7 for measuring stopping distance of a working machine 1, comprising an apparatus 2. The apparatus 2 may be a PDS simulator. The system 7 may further comprise a controller 3 and an engine control unit (ECU) 10. The controller 3 or the engine control unit 10 may be configured to send at least one speed information value to the apparatus and accelerate and/or decelerate speed of the working machine 1.

According to an example embodiment of Figure 2, the apparatus 2 for measuring stopping distance of the working machine 1 may comprise a user interface 210 at least one processor 202, and at least one memory 204 including a computer program code 206. The at least one memory 204 and the computer code 206 may be configured to, with the at least one processor 202, cause the apparatus 2 at least to receive at least one speed parameter based on at least one user input on the user interface 210, receive at least one speed information value from a controller 3 or an engine control unit 10 of the working machine 1, send at least one command to the controller 3 or the engine control unit 10 to at least stop the working machine 1 when the received speed information value is equal to the at least one speed parameter and calculate a stopping distance of the working machine 1.

Figure 2 illustrates an example embodiment of an apparatus 2 configured to practice one or more example embodiments. The apparatus 2 may be a PDS simulator, computing device, or a client device, such as for example a portable device. Although apparatus 2 is illustrated as a single device it is appreciated that, wherever applicable, functions of apparatus 2 may be distributed to a plurality of devices.

The apparatus 2 may comprise at least one processor 202. The at least one processor may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus may further comprise at least one memory 204. The at least one memory may be configured to store, for example, computer program code 206 or the like, for example operating system software and application software. The at least one memory 204 may comprise one or more volatile memory devices, one or more non-volatile memory devices, and/or a combination thereof. For example, the memory may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 2 may further comprise communication interface 210 configured to enable the apparatus 2 to transmit and/or receive information, to/from other apparatuses. The communication interface 210 may be configured to provide at least one wireless radio connection, such as for example a 3GPP mobile broadband connection (e.g. 3G, 4G, 5G), a wireless local area network (WLAN) connection such as for example standardized by IEEE 802.11 series or Wi-Fi alliance; a short range wireless network connection such as for example a Bluetooth, NFC (near-field communication), or radio frequency identification (RFID) connection; a wired connection such as for example a controller area network (CAN), a local area network (LAN) connection such as an Ethernet interface, a universal serial bus (USB) connection or an optical network connection, or the like; or a wired Internet connection. The communication interface 210 may comprise, or be configured to be coupled to, at least one antenna to transmit and/or receive radio signals. The communication interface 210 may be also configured to provide power to the apparatus 2, for example based on Power over Ethernet (PoE). One or more of the various types of connections may be also implemented as separate communication interfaces, which may be coupled or configured to be coupled to a plurality of antennas.

The apparatus 2 may receive program code 206 of the apparatus 2 via the communication interface 210. The program code 206 of the apparatus 2 may be stored at apparatus 2 along with the native program code. The program code 206 of apparatus 2 may be configured to, optionally together with the native program code, to cause the apparatus 2 to perform one or more of the example embodiments described herein.

The apparatus 2 may further comprise a user interface 210 comprising an input device and/or an output device. The input device may take various forms such a keyboard, a touch screen 9, or one or more embedded control buttons. The output device may for example comprise a display 8, a speaker, a vibration motor, or the like.

When the apparatus 2 is configured to implement some functionality, some component and/or components of the apparatus 2, such as for example the at least one processor 202 and/or the memory 204, may be configured to implement this functionality. Furthermore, when the at least one processor 202 is configured to implement some functionality, this functionality may be implemented using the native program code 206 comprised, for example, in the at least one memory 204.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 2 comprises means for performing at least one method described herein. In one example, the means comprises the at least one processor, the at least one memory including program code configured to, when executed by the at least one processor, cause the apparatus to perform the method.

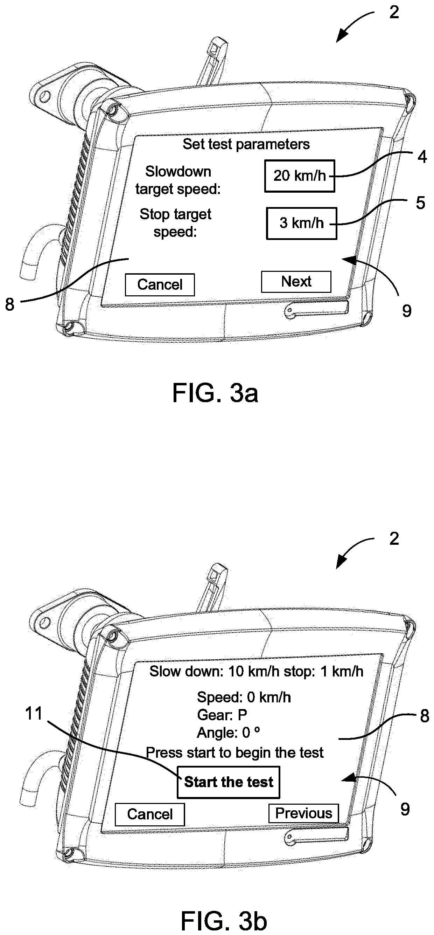

Figure 3a illustrates an example of a simplified side view of the apparatus 2, wherein test parameters 4,5 are set, according to an example embodiment. The apparatus 2 may comprise a user interface 210 comprising an input device and/or an output device. The input device may be a touch screen 9. The output device may be a display 8. In the beginning of a stopping distance measuring operation the test parameters may be set. The apparatus 2 may be configured to receive at least one speed parameter 4,5 based on at least one user input on the user interface 210. The operator of the apparatus may feed the at least one speed parameter 4,5. The speed parameter may be a targeted speed value of the working machine 1. For example, a first speed parameter 4 is a slowdown target speed and a second speed parameter 5 is a stop target speed. The operator may give 20 km/h and 3km/h as an example for the first and second parameter 4,5. The first speed parameter 4 may vary between 5 to 30 km/h, for example. The second speed parameter 5 may vary between 0 to 15 km/h, for example.

Figure 3b illustrates an example of a simplified side view of the apparatus 2, wherein a test may be started, according to an example embodiment. When all the speed parameters 4, 5 needed in the test are received, the operator may press a start the test button 11. This way the apparatus 2 may receive a start input on the user interface and the test begins. When the apparatus has received the start input, it may start to save at least the at least one speed information value from the controller 3 or an engine control unit 10 and at least one time value in the memory 204. The controller 3 or the engine control unit 10 may transmit speed information values constantly, for example, every 50 ms. The saving may be configured to start after the apparatus 2 receives the start input and may end when the speed information value received from the controller 3 or the engine control unit 10 is equal to zero.

The operator may drive the working machine and accelerate. As soon as the speed reaches 20 km/h, the apparatus may give slowdown command and the working machine 1 may start to decelerate. When the speed has gone down to 3km/h the apparatus 2 may give emergency stop command and the working machine 1 may stop. According to an example embodiment, the at least one command to the controller 3 or the engine control unit 10 may comprise at least one proximity detection system (PDS) command.

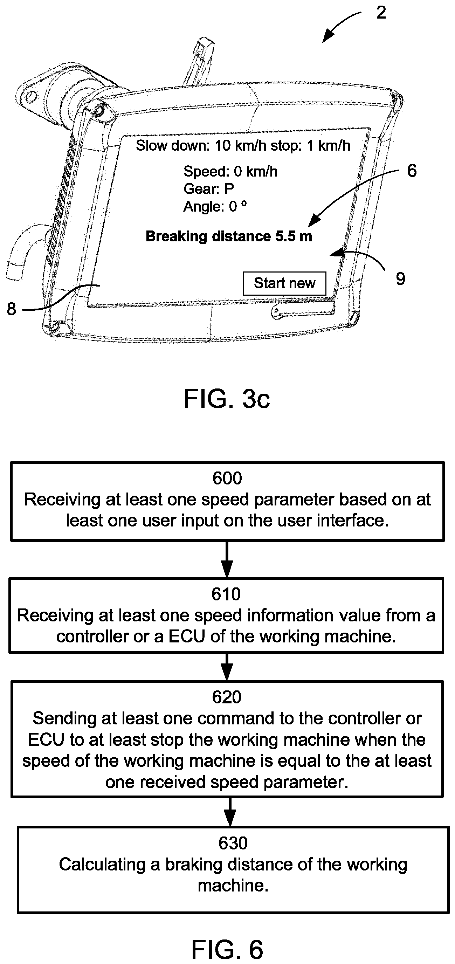

Figure 3c illustrates an example of a simplified side view of the apparatus 2 showing a calculated stopping distance 6, according to an example embodiment. During the process, the apparatus 2 may have been tracking speed and time and calculating the travelled distance. After stopping, the apparatus 2 may calculate the stopping distance 6 based on the at least one speed information value and the at least one time value saved in the memory 204. Then, the apparatus 2 may report the stopping distance 6. The stopping distance may be a travelled distance travelled during the slowdown and stop time. The apparatus 2 may also save other values in the memory 204 during the test, for example, a gear, chassis angle, and/or brake pressure. These values may be shown as a report. This may be very repeatable way to measure the stopping distance of the working machine. It may also be an easy method to test how the PDS would actually be able to stop the working machine travelling at different speeds. In addition, it may be a good way to test PDS function and a brake performance and condition.

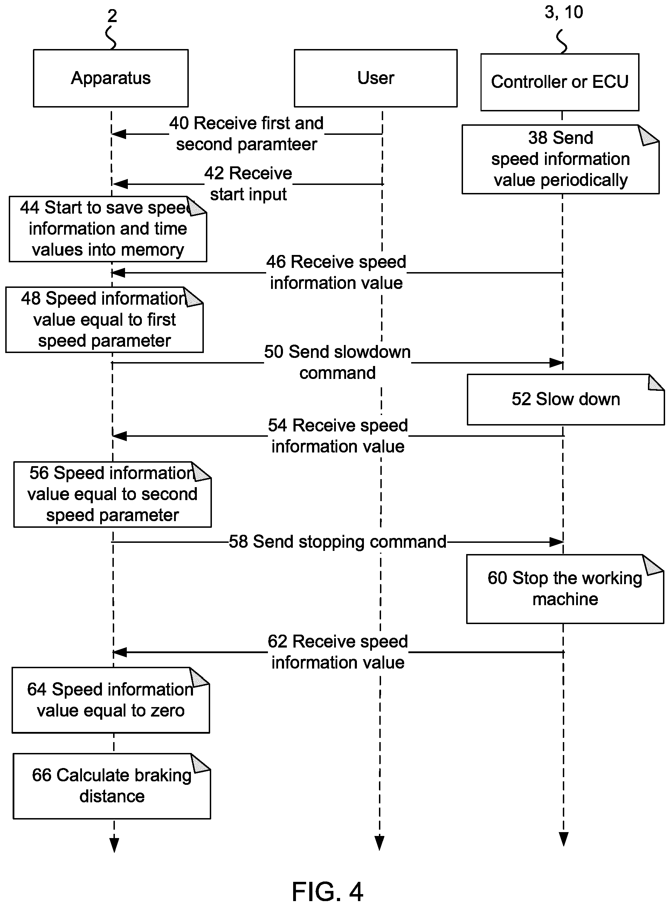

Figure 4 shows an example of signalling and operations within a system 7, according to an example embodiment. The system 7 may comprise an apparatus 2 and a controller 3 or an engine control unit 10. The signalling and operations have been described using the apparatus 2, the controller 3 or the engine control unit (ECU) 10, and a user or operator as an example. The apparatus 2 may comprise a processor 202 causing the apparatus 2 to perform the described functions.

FIG. 4 shows signalling and a flow chart of a stopping distance measuring to be executed by the apparatus 2, when the user presses a start button 11.

At operation 38, the controller 3 or the engine control unit 10 may transmit speed information values periodically to the apparatus 2.

In the beginning of a stopping distance measuring operation test parameters may be set. At operation 40, the apparatus 2 may receive a first and a second speed parameter 4, 5 based on the at least two user input on the user interface 210. The user may provide the first and a second parameter 4, 5 to the apparatus 2 by using a touch screen 9.

When all the speed parameters 4, 5 needed in the test are received, the user may press a start button 11 and the test may begin. At operation 42, the apparatus may receive a start input from the user.

When the apparatus 2 has received the start input, it may start to save at least the at least one speed information value from the controller 3 or the engine control unit 10 and at least one time value in the memory 204, at operation 44. The saving may be configured to start after the apparatus 2 receives the start input.

At operation 46, the apparatus 2 may receive the speed information value from the controller 2 or the engine control unit 10. The apparatus 2 may compare the received speed information value of the working machine 1 to the first speed parameter 4. A processor 202 of the apparatus may do the comparison. When the received speed information value of the working machine 1 is equal to the first speed parameter 4 at operation 48, the apparatus 2 may send a slowdown command to the controller 3 or the engine control unit 10 at operation 50, to decelerate the speed of the working machine 1.

At operation 52 the controller 3 or the engine control unit 10 may receive the slowdown command and may be configured to slow down the speed of the working machine 1.

According to an example embodiment, the controller 3 or the engine control unit 10 may have a controller or the engine control unit communication interface that may allow the controller 3 or the engine control unit 10 to slow down the working machine 2, for example, by switching off an accelerator pedal signal. The controller or the engine control unit communication interface may be configured to enable the controller 3 or the engine control unit 10 to transmit and/or receive information.

According to an example embodiment, the controller 3 receives at least one command from the apparatus 2 and sends at least one command to the engine control unit 10 for decelerating or stopping the working machine 1.

According to an example embodiment, the engine control unit 10 comprises the controller 3. The engine control unit 10 may be configured to receive at least one command from the apparatus 2 and decelerate or stop the working machine 1.

According to an example embodiment, the system 7 comprises a speed sensor. The speed sensor may be connected to the controller or the engine control unit communication interface. The controller or the engine control unit communication interface may receive the speed information values, which the controller 3 may send to the apparatus 2.

According to an example embodiment, the controller 3 is the VIC or the controller 3 comprises the vehicle intervention controller (VIC) configured to decelerate speed of the working machine.

At operation 54, the apparatus 2 may receive the speed information value from the controller 2 or the engine control unit 10. The apparatus 2 may compare the received speed information value of the working machine 1 to the second speed parameter 5. When the received speed information value of the working machine 1 is equal to the second speed parameter 5 at operation 56, the apparatus 2 may send a stopping command to the controller 3 or the engine control unit 10 at operation 58, to stop the working machine 1.

According to an example embodiment, the stopping command may comprise a controlled stop or an emergency stop command. The controlled stop command may stop the working machine 1 smoothly. The emergency stop command may be a full application of the brakes in order to bring the working machine 1 to a stop as quickly as possible. The emergency stop may be made, for example, electrically by forcing the parking brake on.

At operation 60, the controller or the engine control unit 10 may stop the working machine 1.

At operation 62 the apparatus 2 may receive the speed information value. When the speed information value received from the controller 3 or the engine control unit 10 after stopping is equal to zero at operation 64, the apparatus 2 may calculate the stopping distance 6, at operation 66. The stopping distance 6 may be based on the at least one speed information value and the at least one time value saved in the memory 204. The stopping distance 6 may be a travelled distance travelled during the slowdown and stop time. The stopping distance 6 may be a travelled distance between the received start input command and stopping of the working machine.

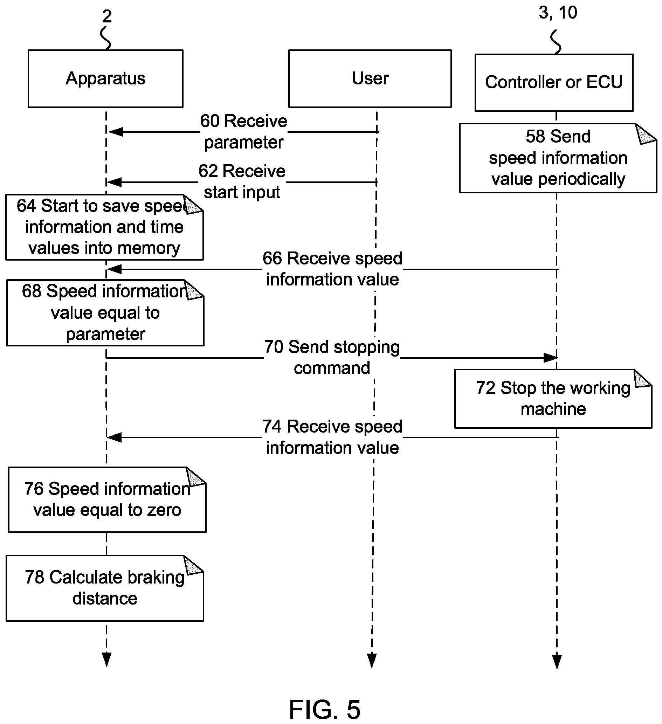

Figure 5 shows a signalling and operations within the system, according to an example embodiment. The system 7 may comprise an apparatus 2 and a controller 3 or the engine control unit (ECU) 10. The signalling and operations have been described using the apparatus 2, the controller 3, the engine control unit 10, and a user or operator as in Figure 4. The apparatus 2 may comprise a processor 202 causing the apparatus 2 to perform the described functions.

FIG. 5 shows signalling and a flow chart of a stopping distance measuring to be executed by the apparatus 2, when the user presses a start button 11.

At operation 58, the controller 3 or the engine control unit 10 may transmit speed information values periodically.

In the beginning of a stopping distance measuring operation test parameters may be set. At operation 60, the apparatus 2 may receive a speed parameter 5 based on the at least one user input on the user interface 210. The user may provide the speed parameter 5 to the apparatus 2 by using a touch screen 9.

When the speed parameter 5 needed in the test is received, the user may press a start button 11 and the test may begin. At operation 62, the apparatus 2 may receive a start input from the user.

When the apparatus 2 has received the start input, it may start to save at least the at least one speed information value from the controller 3 or the engine control unit 10 and at least one time value in the memory 204, at operation 64. The saving may be configured to start after the apparatus 2 receives the start input.

At operation 66, the apparatus 2 may receive the speed information value from the controller 2 or the engine control unit 10. The apparatus 2 may compare the received speed information value of the working machine 1 to the speed parameter 5. A processor 202 of the apparatus may do the comparison. When the received speed information value of the working machine 1 is equal to the speed parameter 5 at operation 68, the apparatus 2 may send a stopping command to the controller 3 or the engine control unit 10 at operation 70, to stop the working machine 1.

According to an example embodiment, the stopping command may comprise a controlled stop or an emergency stop command. The controlled stop command may stop the working machine 1 smoothly. The emergency stop command may be a full application of the brakes in order to bring the working machine 1 to a stop as quickly as possible. The emergency stop may be made, for example, electrically by forcing the parking brake on.

At operation 72, the controller 3 or the engine control unit 10 may stop the working machine 1.

At operation 74 the apparatus 2 may receive the speed information value. When the speed information value received from the controller 3 or the engine control unit 10 after stopping is equal to zero at operation 76, the apparatus 2 may calculate the stopping distance 6, at operation 78. The stopping distance 6 may be based on the at least one speed information value and the at least one time value saved in the memory 204. The stopping distance 6 may be a travelled distance travelled during the stop time. The stopping distance 6 may be a travelled distance between the received start input command and stopping of the working machine.

Figure 6 shows an example method according to an example embodiment of the invention. The method may comprise measuring stopping distance with an apparatus 2 of a working machine 1. The apparatus 2 may comprise a user interface 210, at least one processor 202, and at least one memory 204 including a computer program code 206.

At operation 600, the method may comprise receiving at least one speed parameter 4,5 based on at least one user input on the user interface 210.

At operation 610, the method may comprise receiving at least one speed information value from a controller 3 or the engine control unit (ECU) 10 of the working machine 3.

At operation 620, the method may comprise sending at least one command to the controller 2 or the engine control unit 10 to at least stop the working machine 1 when the received speed information value is equal to the at least one speed parameter 5.

At operation 630, the method may comprise calculating a stopping distance 6 of the working machine 1.

Further features of the method directly result from functionalities of, for example, the apparatus or the system. Different variations of the method may be also applied, as described in connection with the various example embodiments.

An apparatus or a system may be configured to perform or cause performance of any aspect of the method(s) described herein.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first', 'second', or 'third' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus (2) for measuring stopping distance of a working machine (1) comprising
a user interface (210);
at least one processor (202); and
at least one memory (204) including a computer program code, the at least one memory (204) and the computer code configured to, with the at least one processor (202), cause the apparatus (2) at least to:
receive a first and a second speed parameter based on at least two user input on the user interface;
receive at least one speed information value from a controller (3) or an engine control unit (10) of the working machine (1);
send a slowdown command to the controller (3) or the engine control unit (10) to decelerate the working machine (1), when the received speed information value of the working machine is equal to the first speed parameter;
send a stopping command to the controller (3) or the engine control unit (10) to stop the working machine (1) when the received speed information value of the working machine is equal to the second speed parameter;
track speed and time to calculate a travelled distance; and
calculate the stopping distance of the working machine, wherein the stopping distance is a travelled distance travelled during the slowdown and stop time.

2. The apparatus (2) according to claim 1, wherein the apparatus (2) is configured to
receive a start input on the user interface (210) ;
save the speed information from the controller (3) or the engine control unit (10) and at least one time value in the memory (204), wherein saving is configured to start after the apparatus (2) receives the start input and end when the speed information value received from the controller (3) or the engine control unit (10) is equal to zero; and
calculate the stopping distance based on the speed information and the at least one time value saved in the memory (204).

3. The apparatus (2) according to claim 1 or claim 2, wherein the stopping command comprises a controlled stop or an emergency stop command.

4. A method for measuring stopping distance with an apparatus (2) for measuring stopping distance of a working machine (1), wherein the apparatus (2) comprises
a user interface (210);
at least one processor (202); and
at least one memory (204) including a computer program code, the method comprising
receiving a first and a second speed parameter based on at least two user input on the user interface (210) ;
receiving at least one speed information value from a controller (3) or the engine control unit (10) of the working machine (1);
sending a slowdown command to the controller (3) or the engine control unit (10) to decelerate the working machine (1), when the speed information value of the working machine is equal to the first speed parameter;
sending a stopping command to the controller (3) or the engine control unit (10) to stop the working machine when the speed information value of the working machine is equal to the received second speed parameter; and
tracking speed and time to calculate a travelled distance; and
calculating the stopping distance of the working machine, wherein the stopping distance is a travelled distance during the slowdown and stop time.

5. The method according to claim 4, wherein the method further comprises
receiving a start input on the user interface (210) ;
saving the speed information from the controller (3) or the engine control unit (10) and at least one time value in the memory (204), wherein saving is starting after the apparatus (2) receives the start input and ending when the speed information value received from the controller (3) or the engine control unit (10) is equal to zero; and
calculating the stopping distance based on the speed information and the at least one time value saved in the memory (204).

6. A system (7) for measuring stopping distance of a working machine (1), comprising
an apparatus (2) according to any of the claims 1 to 3;
an engine control unit (10); and
a controller (3).

7. The system (7) according to claim 6, wherein
the controller (3) is configured to send at least one speed information value to the apparatus (2), receive at least one command from the apparatus (2), and decelerate or stop the working machine (1); or
the controller (3) is configured to send at least one speed information value to the apparatus (2), receive at least one command from the apparatus (2), and send at least one command to the engine control unit (10) for decelerating or stopping the working machine (1) .

8. The system (7) according to claim 6, wherein
the engine control unit (10) comprises the controller (3), and
the engine control unit (10) is configured to send at least one speed information value to the apparatus (2), receive at least one command from the apparatus (2), and decelerate or stop the working machine (1) .

9. The system (7) according to any one of the claims 6 to 8, wherein
the controller (3) comprises the vehicle intervention controller; or
the controller (3) is a vehicle intervention controller.

10. A working machine (1) comprising a system (7) according to any one of claims 6 to 9.

## Patentansprüche

1. Einrichtung (2) zum Messen eines Anhaltewegs einer Arbeitsmaschine (1), umfassend
eine Benutzeroberfläche (210);
mindestens einen Prozessor (202); und
mindestens einen Speicher (204), der einen Computerprogrammcode beinhaltet, wobei der mindestens eine Speicher (204) und der Computercode konfiguriert sind, mit dem mindestens einen Prozessor (202) die Einrichtung (2) mindestens zu Folgendem zu veranlassen:
Empfangen eines ersten und eines zweiten Geschwindigkeitsparameters basierend auf mindestens zwei Benutzereingaben auf der Benutzeroberfläche;
Empfangen von mindestens einem Geschwindigkeitsinformationswert von einer Steuereinheit (3) oder einer Motorsteuereinheit (10) der Arbeitsmaschine (1);
Senden eines Verlangsamungsbefehls an die Steuereinheit (3) oder die Motorsteuereinheit (10), um die Arbeitsmaschine (1) zu bremsen, wenn der empfangene Geschwindigkeitsinformationswert der Arbeitsmaschine gleich dem ersten Geschwindigkeitsparameter ist;
Senden eines Anhaltebefehls an die Steuereinheit (3) oder die Motorsteuereinheit (10), um die Arbeitsmaschine (1) anzuhalten, wenn der empfangene Geschwindigkeitsinformationswert der Arbeitsmaschine gleich dem zweiten Geschwindigkeitsparameter ist;
Verfolgen von Geschwindigkeit und Zeit, um einen zurückgelegten Weg zu berechnen; und
Berechnen des Anhaltewegs der Arbeitsmaschine, wobei der Anhalteweg ein zurückgelegter Weg ist, der während der Verlangsamungs- und Anhaltezeit zurückgelegt wird.

2. Einrichtung (2) nach Anspruch 1, wobei die Einrichtung (2) konfiguriert ist zum
Empfangen einer Starteingabe an der Benutzeroberfläche (210);
Speichern der Geschwindigkeitsinformationen von der Steuereinheit (3) oder der Motorsteuereinheit (10) und mindestens eines Zeitwerts im Speicher (204), wobei das Speichern so konfiguriert ist, dass es beginnt, nachdem die Einrichtung (2) die Starteingabe empfängt, und endet, wenn der von der Steuereinheit (3) oder der Motorsteuereinheit (10) empfangene Geschwindigkeitsinformationswert gleich null ist; und
Berechnen des Anhaltewegs basierend auf den Geschwindigkeitsinformationen und dem mindestens einen im Speicher (204) gespeicherten Zeitwert.

3. Einrichtung (2) nach Anspruch 1 oder Anspruch 2, wobei der Anhaltebefehl einen kontrollierten Anhaltebefehl oder einen Notanhaltebefehl umfasst.

4. Verfahren zum Messen eines Anhaltewegs mit einer Einrichtung (2) zum Messen eines Anhaltewegs einer Arbeitsmaschine (1), wobei die Einrichtung (2)
eine Benutzeroberfläche (210);
mindestens einen Prozessor (202); und
mindestens einen Speicher (204) umfasst, der einen Computerprogrammcode beinhaltet, wobei das Verfahren umfasst
Empfangen eines ersten und eines zweiten Geschwindigkeitsparameters basierend auf mindestens zwei Benutzereingaben an der Benutzeroberfläche (210);
Empfangen von mindestens einem Geschwindigkeitsinformationswert von einer Steuereinheit (3) oder der Motorsteuereinheit (10) der Arbeitsmaschine (1);
Senden eines Verlangsamungsbefehls an die Steuereinheit (3) oder die Motorsteuereinheit (10), um die Arbeitsmaschine (1) zu bremsen, wenn der Geschwindigkeitsinformationswert der Arbeitsmaschine gleich dem ersten Geschwindigkeitsparameter ist;
Senden eines Anhaltebefehls an die Steuereinheit (3) oder die Motorsteuereinheit (10), um die Arbeitsmaschine anzuhalten, wenn der Geschwindigkeitsinformationswert der Arbeitsmaschine gleich dem empfangenen zweiten Geschwindigkeitsparameter ist; und
Verfolgen von Geschwindigkeit und Zeit, um einen zurückgelegten Weg zu berechnen; und
Berechnen des Anhaltewegs der Arbeitsmaschine, wobei der Anhalteweg ein während der Verlangsamungs- und Anhaltezeit zurückgelegte Weg ist.

5. Verfahren nach Anspruch 4, wobei das Verfahren weiter umfasst
Empfangen einer Starteingabe an der Benutzeroberfläche (210);
Speichern der Geschwindigkeitsinformationen von der Steuereinheit (3) oder der Motorsteuereinheit (10) und mindestens eines Zeitwerts im Speicher (204), wobei das Speichern beginnt, nachdem die Einrichtung (2) die Starteingabe empfängt, und endet, wenn der von der Steuereinheit (3) oder der Motorsteuereinheit (10) empfangene Geschwindigkeitsinformationswert gleich null ist; und
Berechnen des Anhaltewegs basierend auf den Geschwindigkeitsinformationen und dem mindestens einen im Speicher (204) gespeicherten Zeitwert.

6. System (7) zum Messen eines Anhaltewegs einer Arbeitsmaschine (1), umfassend
eine Einrichtung (2) nach einem der Ansprüche 1 bis 3;
eine Motorsteuereinheit (10); und
eine Steuereinheit (3).

7. System (7) nach Anspruch 6, wobei
die Steuereinheit (3) konfiguriert ist, mindestens einen Geschwindigkeitsinformationswert an die Einrichtung (2) zu senden, mindestens einen Befehl von der Einrichtung (2) zu empfangen und die Arbeitsmaschine (1) zu bremsen oder anzuhalten; oder
die Steuereinheit (3) konfiguriert ist, mindestens einen Geschwindigkeitsinformationswert an die Einrichtung (2) zu senden, mindestens einen Befehl von der Einrichtung (2) zu empfangen und mindestens einen Befehl an die Motorsteuereinheit (10) zu senden, um die Arbeitsmaschine (1) zu bremsen oder anzuhalten.

8. System (7) nach Anspruch 6, wobei
die Motorsteuereinheit (10) die Steuereinheit (3) umfasst, und
die Motorsteuereinheit (10) konfiguriert ist, mindestens einen Geschwindigkeitsinformationswert an die Einrichtung (2) zu senden, mindestens einen Befehl von der Einrichtung (2) zu empfangen und die Arbeitsmaschine (1) zu bremsen oder anzuhalten.

9. System (7) nach einem der Ansprüche 6 bis 8, wobei
die Steuereinheit (3) die Fahrzeugeingriffssteuereinheit umfasst; oder
die Steuereinheit (3) eine Fahrzeugeingriffssteuereinheit ist.

10. Arbeitsmaschine (1), die ein System (7) nach einem der Ansprüche 6 bis 9 umfasst.

## Revendications

1. Appareil (2) pour mesurer la distance d'arrêt d'un engin de chantier (1) comprenant
une interface utilisateur (210) ;
au moins un processeur (202) ; et
au moins une mémoire (204) incluant un code de programme informatique, la au moins une mémoire (204) et le code informatique étant configurés pour, avec le au moins un processeur (202), amener l'appareil (2) au moins à :
recevoir un premier et un second paramètre de vitesse sur la base d'au moins deux entrées utilisateur sur l'interface utilisateur ;
recevoir au moins une valeur d'informations de vitesse provenant d'un dispositif de commande (3) ou d'une unité de commande de moteur (10) de l'engin de chantier (1) ;
envoyer une commande de ralentissement au dispositif de commande (3) ou à l'unité de commande de moteur (10) pour décélérer l'engin de chantier (1), lorsque la valeur d'informations de vitesse reçue de l'engin de chantier est égale au premier paramètre de vitesse ;
envoyer une commande d'arrêt au dispositif de commande (3) ou à l'unité de commande de moteur (10) pour arrêter l'engin de chantier (1) lorsque la valeur d'informations de vitesse reçue de l'engin de chantier est égale au second paramètre de vitesse ;
suivre la vitesse et le temps pour calculer une distance parcourue ; et
calculer la distance d'arrêt de l'engin de chantier, dans lequel la distance d'arrêt est une distance parcourue pendant le temps de ralentissement et d'arrêt.

2. Appareil (2) selon la revendication 1, dans lequel l'appareil (2) est configuré pour
recevoir une entrée de démarrage sur l'interface utilisateur (210) ;
enregistrer les informations de vitesse provenant du dispositif de commande (3) ou de l'unité de commande de moteur (10) et au moins une valeur de temps dans la mémoire (204), dans lequel l'enregistrement est configuré pour démarrer après que l'appareil (2) a reçu l'entrée de démarrage et se terminer lorsque la valeur d'informations de vitesse reçue du dispositif de commande (3) ou de l'unité de commande de moteur (10) est égale à zéro ; et
calculer la distance d'arrêt sur la base des informations de vitesse et de la au moins une valeur de temps enregistrée dans la mémoire (204).

3. Appareil (2) selon la revendication 1 ou la revendication 2, dans lequel la commande d'arrêt comprend une commande d'arrêt régulé ou une commande d'arrêt d'urgence.

4. Procédé de mesure de la distance d'arrêt avec un appareil (2) pour mesurer la distance d'arrêt d'un engin de chantier (1), dans lequel l'appareil (2) comprend
une interface utilisateur (210) ;
au moins un processeur (202) ; et
au moins une mémoire (204) incluant un code de programme informatique, le procédé comprenant
la réception d'un premier et d'un second paramètre de vitesse sur la base d'au moins deux entrées utilisateur sur l'interface utilisateur (210) ;
la réception d'au moins une valeur d'informations de vitesse provenant d'un dispositif de commande (3) ou de l'unité de commande de moteur (10) de l'engin de chantier (1) ;
l'envoi d'une commande de ralentissement au dispositif de commande (3) ou à l'unité de commande de moteur (10) pour décélérer l'engin de chantier (1), lorsque la valeur d'informations de vitesse de l'engin de chantier est égale au premier paramètre de vitesse ;
l'envoi d'une commande d'arrêt au dispositif de commande (3) ou à l'unité de commande de moteur (10) pour arrêter l'engin de chantier lorsque la valeur d'informations de vitesse de l'engin de chantier est égale au second paramètre de vitesse reçu ; et
le suivi de la vitesse et du temps pour calculer une distance parcourue ; et
le calcul de la distance d'arrêt de l'engin de chantier, dans lequel la distance d'arrêt est une distance parcourue pendant le temps de ralentissement et d'arrêt.

5. Procédé selon la revendication 4, dans lequel le procédé comprend en outre
la réception d'une entrée de démarrage sur l'interface utilisateur (210) ;
l'enregistrement des informations de vitesse provenant du dispositif de commande (3) ou de l'unité de commande de moteur (10) et d'au moins une valeur de temps dans la mémoire (204), dans lequel l'enregistrement démarre après que l'appareil (2) a reçu l'entrée de démarrage et se termine lorsque la valeur d'informations de vitesse reçue du dispositif de commande (3) ou de l'unité de commande de moteur (10) est égale à zéro ; et
le calcul de la distance d'arrêt sur la base des informations de vitesse et de la au moins une valeur de temps enregistrée dans la mémoire (204).

6. Système (7) de mesure de la distance d'arrêt d'un engin de chantier (1), comprenant
un appareil (2) selon l'une quelconque des revendications 1 à 3 ;
une unité de commande de moteur (10) ; et
un dispositif de commande (3).

7. Système (7) selon la revendication 6, dans lequel
le dispositif de commande (3) est configuré pour envoyer au moins une valeur d'informations de vitesse à l'appareil (2), recevoir au moins une commande de l'appareil (2) et décélérer ou arrêter l'engin de chantier (1) ; ou
le dispositif de commande (3) est configuré pour envoyer au moins une valeur d'informations de vitesse à l'appareil (2), recevoir au moins une commande de l'appareil (2) et envoyer au moins une commande à l'unité de commande de moteur (10) pour décélérer ou arrêter l'engin de chantier (1).

8. Système (7) selon la revendication 6, dans lequel
l'unité de commande de moteur (10) comprend le dispositif de commande (3), et
l'unité de commande de moteur (10) est configurée pour envoyer au moins une valeur d'informations de vitesse à l'appareil (2), recevoir au moins une commande de l'appareil (2) et décélérer ou arrêter l'engin de chantier (1).

9. Système (7) selon l'une quelconque des revendications 6 à 8, dans lequel
le dispositif de commande (3) comprend le dispositif de commande d'intervention sur véhicule ; ou
le dispositif de commande (3) est un dispositif de commande d'intervention sur véhicule.

10. Engin de chantier (1) comprenant un système (7) selon l'une quelconque des revendications 6 à 9.
